# EUROPEAN PATENT SPECIFICATION

(11) **EP 2 142 332 B1**
(45) Date of publication and mention of the grant of the patent: **03.10.2012**
(21) Application number: 08745163.9
(22) Date of filing: 04.04.2008
(51) Int. Cl.: B23K 9/02, B23K 9/167, B23K 9/23, C21D 7/04, C21D 8/00, C21D 8/10, C21D 9/50, F17C 3/08

(54) **METHOD OF MAKING A SEAM-WELDED 36 NI-FE ALLOY STRUCTURE**
VERFAHREN ZUR HERSTELLUNG EINER NAHTGESCHWEISSTEN 36-NI-FE-LEGIERUNGSSTRUKTUR
PROCÉDÉ DE FABRICATION D'UNE STRUCTURE SOUIDEE EN D'ALLIAGE 36 NI-FE

(30) Priority: 09.05.2007 US 746307
(43) Date of publication of application: 13.01.2010
(73) Proprietor: Conocophillips Company, Houston, TX 77079 (US)
(72) Inventor: WILSON, Stuart L., Pearland, Texas 77584 (US)
(74) Representative: Simpson, Paul Christopher
(86) International application number: PCT/US2008/059481
(87) International publication number: WO 2008/140873

(56) References cited:
- US-A- 3 184 577
- US-A- 5 702 543
- US-A1- 2002 011 287
- US-A1- 2002 084 008
- DATABASE WPI Week 198529 Thomson Scientific, London, GB; AN 1985-174547 XP002487094 -& JP 60 103131 A (NIPPON STEEL CORP) 7 June 1985 (1985-06-07)

## Description

The present invention relates to a method of welding a structure according to the preamble of claim 1 (see, for example, US 3 184 577), i.e. making welded steel for use in storage tanks, pipelines, and other equipment. More particularly, the welded steel, including the weld itself, is formed of an iron-nickel alloy having a low thermal expansion coefficient. Such welded steel may be used to form structures suitable for transport and/or storage of cryogenic substances, such as liquefied natural gas (LNG).

### BACKGROUND OF THE INVENTION

In various industries such as oil and gas, there is a need to store and transport substances at cryogenic conditions, wherein a substance may be cooled and liquefied from a gaseous state. For example, there is a need for containers for storing and transporting LNG at cryogenic conditions such as temperatures ranging from about -110 °C to about -170 °C and at pressures in the broad range of about atmospheric to about 6000 kPa. There is also a need for containers for safely and economically storing and transporting other pressurized fluids, such as oxygen, nitrogen, helium, hydrogen, argon, neon, fluorine, air, methane, ethane, or propane, at cryogenic temperatures.

Several challenges exist when selecting materials to store or transport cryogenic substances. The materials selected must maintain sufficient ductility and tensile strength to avoid failure under cryogenic conditions. Ductile materials are favored because they deform under excessive stress, while brittle materials fracture. Many materials transition from ductile to brittle behavior as the temperature is lowered, making them inadequate for cryogenic applications. Meanwhile, the material must also have a low coefficient of thermal expansion (CTE). The CTE quantifies the amount of contraction within a material as the temperature is lowered. These contractions create thermal stress within a cryogenic structure and modify its geometry; therefore a lower CTE minimizes these effects. In particular, cryogenic pipes often require pipe looping to alleviate thermal stresses caused by a high CTE at the sacrifice of impeding flow within the pipe.

Generally, metals are favored for cryogenic structures because of their high mechanical strength and ductile behavior at low temperatures. Although many metals are brittle at cryogenic conditions, metals having a face-centered cubic crystalline structure (fcc), such as aluminum, copper, nickel and their alloys, are ductile. Nickel-iron alloys comprising between 35-50% by weight nickel are favored fcc metals because of their low CTE. 36% Ni-Fe alloy, sometimes referred to as FeNi36 and commonly sold under the trademark "Invar" by Imphy Alloys, is preferred because it has an exceptionally low CTE.

The processing of metals into cryogenic structures also creates unique difficulties. It is desirable to produce structures having uniform material properties throughout. In particular, it is desirable for cryogenic structures to exhibit uniform mechanical strength and thermal expansion properties. If a structure is not of uniform mechanical strength, fracture will likely initiate at the mechanically weaker regions at stresses tolerated by the stronger regions. Meanwhile, inhomogeneous thermal expansion behavior creates additional stresses under cryogenic conditions. When one region of a structure exhibits greater contraction because of a higher CTE, additional stress is created along the boundary between the high and low CTE regions that may cause mechanical failure. This phenomenon is often referred to as "CTE mismatch."

To avoid variances in mechanical strength and CTE, metallic cryogenic structures are often formed from a single mold or billet to obtain homogenous material properties. For example, a metal pipe can be formed from a single billet of steel by first heating the billet to around 1000° C and piercing a longitudinal hole through the axis of the billet using the Mannesmann piercing method. The wall-thickness and diameter are then formed into the desired geometry by a series of extrusion and hot or cold sizing methods. Such processes are effective in obtaining homogenous mechanical strength and CTE for cryogenic structures; however their utility is limited because of economic and size considerations. Generally, forming a billet or mold is more expensive than other techniques because of the high temperatures and extensive extrusion and sizing required. Also, the overall size of the formed structure is limited by the volume of the mold or billet to be processed. It is impracticable to form metallic cryogenic structures from a single mold or billet beyond a certain size because of the limited volumes that can currently be produced via casting, forging or any other method. Transportation constraints may also limit the size of structures formed from a single mold or billet.

As an alternative to forming metallic cryogenic structures from a single mold or billet, a structure may be fabricated using a welding process, where material is joined along a seam. A typical welding process involves the application of some energy source along the seam to form a pool of molten material that coalesces and forms a solid joint upon cooling. There are numerous energy sources that may be used for welding cryogenic structures, including gas flame, electric arc, laser, electron beam, friction and ultrasound.

Often a filler material is added along the seam to aid the welding of the base material. The filler material is melted during the welding process and coalesces to become part of the weld bead that solidifies along the seam of the joint. Filler material is often used to improve various properties of the weld. For example, a filler material may be selected so that the weld is mechanically stronger than the base material to ensure mechanical failure does not occur along the welded seam.

An example of the utilization of welding techniques for cryogenic structures is the production of pipes. A pipe may be produced by first forming a metallic plate into a tubular shape of specified diameter, length, and longitudinal seam region using a high-speed roll forming mill. The seam region may then be welded using gas tungsten arc welding, also known as tungsten inert gas (TIG) welding, with a metallic filler material that is mechanically stronger than the base material, as required by piping and cryogenic industry standards.

Welding techniques are often preferred for producing cryogenic structures because they enable the production of larger structures and are more economical than forming a billet or mold. Instead of forming a billet or mold, the source material can be a metal plate formed by lower-cost continuous casting. The welding process allows multiple plates to be joined if necessary. Accordingly, the size of the fabricated structure is not limited by the source material, and in some instances may be fabricated onsite to avoid transportation limitations. Furthermore, the welding process itself may be more economical than the alternative of extrusion and/or hot and cold working.

Notwithstanding the benefits, the utilization of welding techniques for the fabrication of cryogenic structures is limited because they inherently create inhomogeneous material properties. The welded seam usually has different mechanical properties because the welding process creates a different microstructure along the seam. Typically, welding with a filler material that matches the base metal creates larger grain sizes along the seam, which results in a mechanically weaker seam that is susceptible to failure. To avoid failure along the welded seam, a mechanically stronger filler material is often used to make the seam stronger than the base material. Nevertheless, the stronger filler material used to weld 36% Ni-FE alloys usually has a larger CTE than the base material (because of the alloy additions for strength), which results in a CTE mismatch that may fail under cryogenic conditions. Thus, an ongoing need exists for improved seam-welded 36% Ni-Fe alloy structures and methods of making and using same.
US 3 184 577 discloses a welding material for forming welds with a low coefficient of expansion.
US 5 702 543 discloses cold working and annealing an alloy to promote recrystallisation. US 2002/0 112 87 discloses a welded structure made from an alloy having a low coefficient of thermal expansion. US 2002/084008 discloses a surface treatment process for preventing intergranular cracking.

### SUMMARY OF THE INVENTION

The present invention relates to a process for welding a structure having a similar coefficient of thermal expansion in both the weld and base material of the structure. More particularly, the present invention relates to a method as claimed in claim 1. The method produces structures from 36% Ni-Fe alloy, for example structures such as pipe for use in cryogenic applications such as transport, conveyance, or storage of a cryogenic liquid.

In an embodiment, a method of welding a structure includes: (1) forming a structure of desired wall thickness, length, and seam region, (2) welding the structure along the seam region with 36% Ni-Fe alloy such that excess weld alloy is left as part of a weld bead at the seam region, (3) work hardening (e.g., cold working) the weld bead such that the thickness at the seam region is approximately the same as the desired wall thickness of the structure, and (4) heat treating the seam region. Upon completion of heat treating, the grain size within the seam region is similar to that of the rest of the structure. Such structures are useful in cryogenic applications and conditions.

In another embodiment, the method produces, a pipe including: (1) a tubular body having a predetermined wall thickness and length, and (2) a welded seam extending the length of the tubular body. The tubular body and welded seam are fabricated from 36% Ni-Fe alloy and have substantially the same grain size. Such pipes are useful in cryogenic applications and conditions.

These and other embodiments, features and advantages of the present invention will become apparent with reference to the following detailed description and examples.

### BRIEF DESCRIPTION OF THE DRAWINGS

For a more detailed description of the present invention, reference will now be made to the accompanying Figures, wherein:

Figure 1 is graph of the coefficients of thermal expansion of various Ni-Fe alloy compositions;

Figure 2 is a flow diagram of processing steps in accordance with the present invention; and

Figures 3a-3b are perspective views of different weld joints in accordance with the present invention.

### DETAILED DESCRIPTION OF PREFERRED EMBODIMENTS

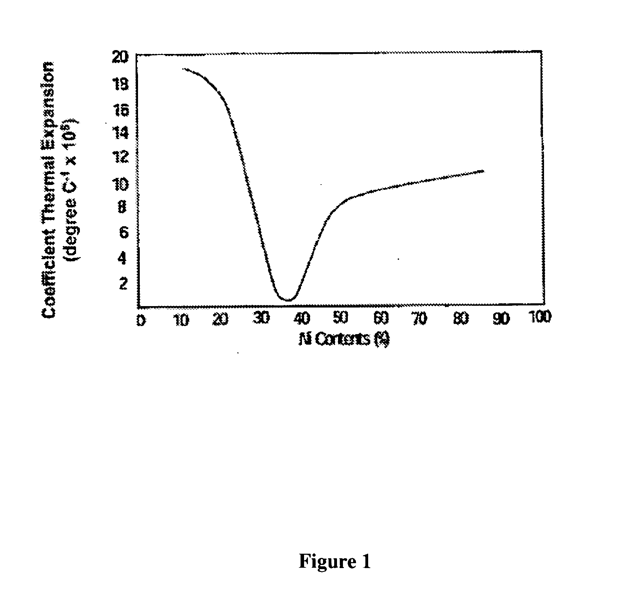

The present invention relates to the welding of 36% Ni-Fe alloy, which may be formed into structures (e.g., pipe) suitable for use under cryogenic conditions. 36% Ni-Fe alloy is desirable for use in cryogenic structures because it is ductile at cryogenic temperatures and the composition produces a minimum in CTE for Ni-Fe alloys that is exceptionally low. Referring to Figure 1, a graph illustrating the CTE over a range Ni-Fe alloy compositions is shown. From Figure 1 it is clear that there is a distinct CTE minimum of about 1.3 x 10⁻⁶ °C⁻¹ at -196 °C for 36% Ni-Fe alloy. This is approximately 1/10 the CTE of typical stainless steel.

As used herein, 36% Ni-Fe alloy is defined by ASTM F 1684 or ASTM A 333/A 333M specifications, each of which is incorporated by reference herein in its entirety. In embodiments, the 36% Ni-Fe alloy comprises 36% Ni with the balance Fe and trace elements in amounts described in the ASTM specifications. In an embodiment, the 36% Ni-Fe alloy comprises alloy UNS No. K93603 as described in ASTM F 1684. In an embodiment, the 36% Ni-Fe alloy comprises alloy Grade 11 as described in ASTM A 333/A 333M. In an embodiment, the 36% Ni-Fe alloy comprises one or more alloys described in Table 1. In an embodiment, the 36% Ni-Fe alloy comprises an alloy having a minimum CTE as shown in the plot of Figure 1. All elements are understood to be given by weight %.

**Table 1: ASTM F1684**

| **Element** | **UNS No. K93603 Composition, %** | **UNS No. K93050 Composition, %** |
|---|---|---|
| Iron, nominal | remainder^{A} | remainder^{A} |
| Nickel, nominal | 36^{A} | 36^{A} |
| Cobalt, max | 0.50 | 0.50 |
| Manganese, max | 0.60 | 1.00 |
| Silicon, max | 0.40 | 0.35 |
| Carbon, max | 0.05 | 0.15 |
| Aluminum, max | 0.10^{B} | ....^{C} |
| Magnesium, max | 0.10^{B} | ....^{C} |
| Zirconium, max | 0.10^{B} | ....^{C} |
| Titanium, max | 0.10^{B} | ....^{C} |
| Chromium, max | 0.25 | 0.25 |
| Selenium | .... | 0.15 to 0.30 |
| Phosphorus, max | 0.015^{D} | 0.020 |
| Sulfur, max | 0.015^{D} | 0.020 |

| | | |
|---|---|---|
| ^{A} For UNS No. K93603 and K93050, the iron, and nickel requirements are nominal. These levels may be adjusted by the manufacturer to meet the requirements for the coefficient of thermal expansion as specified in 12.1. ^{B} The total of aluminum, magnesium, titanium, and zirconium shall not exceed 0.20% ^{C} These elements are not measured for this alloy. ^{D} The total of phosphorous and sulfur shall not exceed 0.025%. | | |

**Table 2: ASTM A333/A333M**

| **Element** | **Composition, % - Grade 11** |
|---|---|
| Carbon, max | 0.10 |
| Manganese | 0.60 max |
| Phosphorus, max | 0.025 |
| Sulfur, max | 0.025 |
| Silicon | 0.35 max |
| Nickel | 35.0-37.0 |
| Chromium | 0.50 max |
| Copper | .... |
| Aluminum | .... |
| Vanadium, max | .... |
| Columbium, max | .... |
| Molybdenum, max | 0.50 max |
| Cobalt | 0.50 max |

The starting or base material is preferably one or more plates produced by continuous casting or a similar method known in the art. In embodiments, the plates are further characterized as set forth in the ASTM F 1684 or ASTM A 333/A 333M specifications. The metal plates may be subjected to further processing to achieve desired properties, such as smoothness, corrosion resistance, etc. The plates preferably have a substantially homogenous microstructure so as to ensure uniform mechanical properties within the starting material.

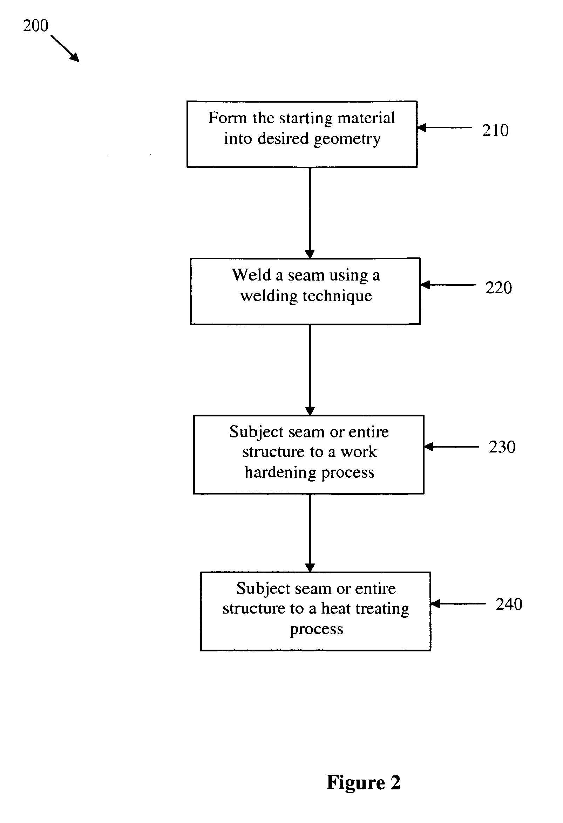

Referring now to Figure 2, a flow diagram is shown illustrating the processing steps 200 in accordance with the present disclosure. As mentioned above, the starting material may be initially subjected to various metalworking processes known within the art to form the plate into a desired geometry 210 before welding. The starting material may be machined by various techniques, including drilling, turning, threading, cutting, grinding or any other method known in the art. Furthermore, the starting material may be formed via forging, rolling, rolling, extrusion, spinning, bending, or any other technique known in the art. For example, the plate may subjected to hot or cold rolling to form a tubular shape to produce a pipe. In some embodiments, the pipe edges may then be tapered using machining techniques.

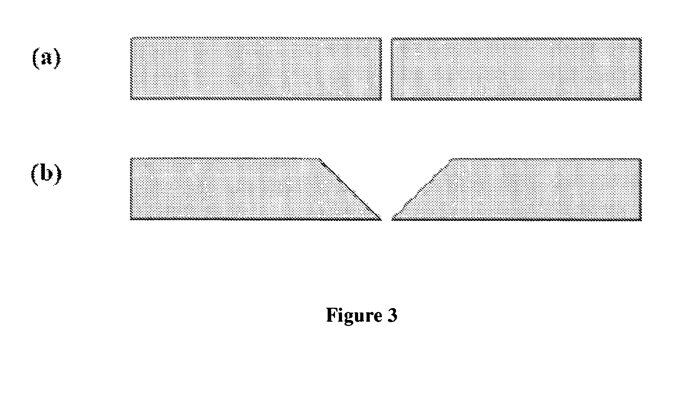

Once the desired geometry is achieved, at least one seam is welded using a welding technique 220 such as shielded metal arc, gas tungsten arc or tungsten inert gas (TIG), gas metal arc or metal inert gas (MIG), plasma arc, electron beam, oxyacetylene, spot welding, seam welding, projection welding, flash welding or any other technique known in the art. Any joint type may be utilized for welding. For example, a butt joint as shown in Figure 3a or a single-V preparation joint as shown in Figure 3b may be used. Additional suitable joint types include corner joints, edge joints, double-V preparation joints, single-U joints, and double-U joints. For example, as shown in Figure 3b, single-V preparation joint includes two tapered surfaces that meet at a single point along the axis of the seam to form a V-shape. The void within the joint geometry accommodates a filler material that is added during the welding process to form a weld bead, which is intentionally made thicker than the base material to accommodate future cold reduction. A filler material used, according to the present invention, has exactly the same composition as the 36% Ni-Fe alloy base material to fill voids formed in various joint types. Matching the filler and base materials ensures the CTE is exactly the same in both the welded seam and the base material and avoids a CTE mismatch. In an embodiment, the filler material of 36% Ni-Fe alloy is used to form a weld bead via gas tungsten arc welding within a single-V joint formed from 36% Ni-Fe plate(s).

After the welded seam has solidified, the seam is subjected to a work hardening process 230, such as cold rolling, planishing, or any other method known within the art, so as to cold work the welded seam. Without intending to be limited by theory, it is believed that the work hardening process 230 increases the density of dislocations and/or adds activation energy to the material for use in grain refining during the subsequent heat treating or annealing process. The yielding mechanism of metals involves the movement of dislocations. Increasing the density of dislocations impedes movement because the dislocations are likely to cross each other, forming a "jog." Because the mechanism for yielding is impeded, the yield strength in the welded seam is increased. In an embodiment, the welded seam is work hardened by planishing the seam to reduce the thickness of the seam. The planished seam may be reduced in thickness by from about 20% to about 60%, alternatively by about 20, 25, 30, 35, 40, 45, 50, 55, or 60 %. In an embodiment, the seam is planished such that the weld bead is of similar thickness to (e.g., about or substantially equal to) the base material.

The welded seam or the entire structure is subjected to a heating treating or annealing process 240, so as to reduce the grain size within the welded seam to a similar grain size of (e.g., about or substantially equal to) the base material. In an embodiment, the average grain size within the welded seam deviates from the average grain size in the base material by 10% or less. Without intending to be limited by theory, it is believed that the reduction of grain size results in more grain boundaries that pin the motion of dislocations that enable yielding, the yield strength is increased. And, because the amount of stress required to fracture a material is inversely proportional to grain size, the ultimate tensile strength of the material is increased by the heat treating process. Upon completion of the heat treating process 240, the weld bead may equal or exceed the strength of the base material. For example, the weld bead and the base material may both exceed the minimum tensile strength set forth in applicable specifications such as ASTM specifications disclosed herein.

In an embodiment, the welded seam itself is subjected to localized heating or the entire structure is heated under conditions effective to refine the grain size, to achieve a uniform grain structure that permits ductile behavior, to recrystallize the welded seam or seam region, or combinations thereof. Suitable heat treating conditions include heating the welded seam and/or entire structure at times and temperatures sufficient or effective to cause the welded seam and/or seam region to undergo such changes (e.g., recrystallization, grain size refinement/uniformity, etc.). In an embodiment, the welded seam and/or the entire structure is heated to 760 to 870°C (1400 to 1600°F) for a time sufficient or effective to undergo such changes (e.g., recrystallization, grain size refinement/uniformity, etc.). The welded seam or entire structure may be subjected to multiple heat treating cycles.

Upon heat treating, the seam or entire structure may be subjected to various intermediate and/or finishing techniques including blasting, cleaning, and pickling as desired. For example, in some instances it may be desirable to ultrasonically inspect the weld. Likewise, in some instances, the structure may be subjected to blasting or chemical pickling to remove oxide deposits. Coatings may optionally be applied to the manufactured structure.

Since the completed welded seam is of a similar composition and grain structure of the base material, the process creates a structure of approximately uniform mechanical strength and thermal expansion properties utilizing standard welding techniques. The mechanical strength of the structure should be sufficient to operate under cryogenic conditions, as measured by the yield strength, ultimate tensile strength and toughness.

The ultimate tensile strength may be measured by standard tensile testing techniques, such as those set forth in ASTM Standard E8-04, "Standard Testing Methods for Tension Testing of Metallic Materials," incorporated by reference herein in its entirety. In an embodiment, both the base material and welded seam of the structure have an ultimate tensile strength of equal to or greater than 58 ksi at room temperature, alternatively equal to or greater than 60 ksi, or alternatively equal to or greater than 65 ksi.

The yield strength may be measured by standard tensile testing techniques, such as those set forth in ASTM Standard E8-04, "Standard Testing Methods for Tension Testing of Metallic Materials." In a preferred embodiment, both the base material and welded seam of the structure have a yield strength of equal to or greater than 30 ksi at room temperature, alternatively equal to or greater than 33.33 ksi, or alternatively equal to or greater than 35 ksi.

The present invention may be used to fabricate any structure for use in an industrial process, for example structures requiring low CTE such as those operating under cryogenic conditions. In particular, the invention is suited for fabricating structures for the storage, conveyance, and transportation of liquefied gases, including but not limited to, nitrogen, oxygen, helium, hydrogen, neon, fluorine, argon, methane, air, propane (LP), and natural gas (LNG). In an embodiment, structures as described herein may be used in a LNG process. Examples of suitable gas liquefaction process and associated equipment and structures are disclosed in U.S. Pat. App. Pub. No. 20030005698 and U.S. Pat. Nos. 7,074,322; 7,047,764; 7,127,914; 6,722,157; 6,658,8921 6,647,744; 6,250,105; 6,158,240; 6,125,653; 6,070,429; 6,023,942; 5,724,833; 5,651,270; 5,600,969; 5,611,216; 5,473,900; 4,698,080; 4,548,629; 4,430,103; 4,225,329; 4,195,979; and 4,172,7111.

Structures that may be implemented using the present invention include geometries commonly used in piping, such as tubular shapes or elbow joints, or those in storage tanks, such as a sphere or cylinder with dished, elliptical or flat ends. Such pipes and storage tanks may be used in on-shore or off-shore liquefaction, transport, storage, or regasification facilities, including marine facilities such as platforms, docks, and tanker ships. In any of the structures chosen, it is understood that the structure includes a desired wall thickness, length, and seam region. The present invention is especially suited for the production of pipes, where a tubular shape is easily formed from a plate and contains a linear seam that can be readily planished.

While preferred embodiments of this invention have been shown and described, modification thereof can be made by one skilled in the art without departing from the teaching of this invention. The embodiments described herein are exemplary only and are not limiting. Many variations and modifications of the system and apparatus are possible and are within the scope of this invention. For example, the present invention is not intended to be limited to any particular geometry and may be used to fabricate any structure that operates under cryogenic conditions. Accordingly, the scope of protection is not limited to the embodiments described herein, but is only limited by the claims, which follow.

## Claims

1. A method of welding a structure comprising:
forming a structure of desired wall thickness, length, and seam region, wherein the structure is fabricated from 36% Ni-Fe alloy base material; **characterised by**
welding the structure along the seam region with 36% Ni-Fe alloy filler of exactly the same composition as the Ni-Fe base alloy such that excess weld reinforcement is left as part of a weld bead at the seam region;
cold working the weld bead such that the thickness at the seam region is reduced; and
heat treating the seam region under conditions effective to cause the seam region to have an ultimate tensile strength, yield strength, or both equal to or greater than the base material.

2. The method of claim 1 wherein coefficient of thermal expansion is equal in the base material and the seam region.

3. The method of claim 1 wherein grain size is equal in the base material and the seam region.

4. The method of claim 1 wherein the heat treating is performed at temperatures in a range from 760°C (1400°F) to 871°C (1600°F) for a time effective to recrystallise the seam region.

5. The method of claim 1 wherein the thickness at the seam region is reduced in a range of from 20% to 80% following cold working.

6. The method of claim 1 wherein the thickness at the seam region is substantially the same as the desired wall thickness of the structure following cold working.

7. The method of claim 1 wherein the welding is performed using tungsten inert gas welding.

8. The method of claim 1 wherein the seam region is formed from a single-V preparation joint.

9. The method of claim 1 wherein the step of forming structure further comprises shaping a plate to form the seam region.

10. The method of claim 1 wherein the structure and the welded seam region have an ultimate tensile strength of equal to or greater than 400MPa (58ksi), a yield strength of equal to or greater than 207MPa (30ksi), or both.

11. The method of claim 1 wherein the structure comprises a pipe or storage tank rated for service at cryogenic conditions.

## Patentansprüche

1. Verfahren zum Schweißen einer Struktur, umfassend:
Bilden einer Struktur mit gewünschter Wanddicke, Länge und gewünschtem Nahtbereich, wobei die Struktur aus einer 36% Ni-Fe-Legierung als Grundwerkstoff hergestellt wird, **gekennzeichnet durch**
Schweißen der Struktur entlang des Nahtbereichs mit einer 36% Ni-Fe-Legierung als Zusatzwerkstoff mit genau derselben Zusammensetzung wie die Ni-Fe-Grundlegierung, sodass überschüssige Nahtüberhöhung als Teil einer Schweißraupe in dem Nahtbereich bleibt;
Kaltbearbeiten der Schweißraupe, sodass die Dicke in dem Nahtbereich verringert wird, und
Wärmebehandeln des Nahtbereichs unter Bedingungen, die wirksam sind, um zu veranlassen, dass der Nahtbereich eine endgültige Zugfestigkeit, Dehngrenze oder beides aufweist, die gleich dem oder größer als der Grundwerkstoff sind.

2. Verfahren nach Anspruch 1, wobei der Wärmeausdehnungskoeffizient in dem Grundwerkstoff und dem Nahtbereich gleich ist.

3. Verfahren nach Anspruch 1, wobei die Korngröße in dem Grundwerkstoff und dem Nahtbereich gleich ist.

4. Verfahren nach Anspruch 1, wobei die Wärmebehandlung bei Temperaturen in einem Bereich von 760 °C (1400 °F) bis 871 °C (1600 °F) über einen Zeitraum durchgeführt wird, der wirksam ist, um den Nahtbereich zu rekristallisieren.

5. Verfahren nach Anspruch 1, wobei die Dicke in dem Nahtbereich nach der Kaltbearbeitung in einem Bereich von 20 % bis 80 % verringert ist.

6. Verfahren nach Anspruch 1, wobei die Dicke in dem Nahtbereich im Wesentlichen dieselbe ist wie die gewünschte Wanddicke der Struktur nach der Kaltbearbeitung.

7. Verfahren nach Anspruch 1, wobei das Schweißen unter Verwendung des Wolframinertgasschweißens durchgeführt wird.

8. Verfahren nach Anspruch 1, wobei der Nahtbereich aus einem V-Stoß geformt wird.

9. Verfahren nach Anspruch 1, wobei der Schritt des Bildens einer Struktur ferner das Formen einer Platte zum Bilden des Nahtbereichs umfasst.

10. Verfahren nach Anspruch 1, wobei die Struktur und der geschweißte Nahtbereich eine Zugfestigkeit von gleich oder mehr als 400 MPa (58 ksi), eine Dehngrenze von gleich oder mehr als 207 MPa (30 ksi), oder beides aufweisen.

11. Verfahren nach Anspruch 1, wobei die Struktur ein Rohr oder einen Lagerbehälter umfasst, das bzw. der für den Betrieb unter Tieftemperaturbedingungen ausgelegt ist.

## Revendications

1. Procédé de soudage d'une structure, comprenant les étapes consistant à :
former une structure d'épaisseur de paroi, de longueur et de région de soudure souhaitées, dans lequel la structure est fabriquée à partir d'un matériau de base à 36 % d'alliage de Ni-Fe ; **caractérisé par** les étapes consistant à :
souder la structure le long de la région de soudure avec un métal d'apport de 36 % d'alliage de Ni-Fe ayant exactement la même composition que l'alliage de base de Ni-Fe de sorte qu'un renforcement de soudure excédentaire soit laissé en tant que partie d'un cordon de soudage dans la région de soudure ;
façonner à froid le cordon de soudure de sorte que l'épaisseur au niveau de la région de soudure soit réduite ; et
traiter à chaud la région de soudure dans des conditions permettant d'amener la région de soudure à avoir une résistance finale à la traction, une résistance à la déformation ou les deux résistances égales ou supérieures à celles du matériau de base.

2. Procédé selon la revendication 1, dans lequel le coefficient de dilatation thermique est le même dans le matériau de base et dans la région de soudure.

3. Procédé selon la revendication 1, dans lequel la taille granulaire est la même dans le matériau de base et dans la région de soudure.

4. Procédé selon la revendication 1, dans lequel le traitement à chaud est effectué à des températures dans une plage de 760 °C (1400 °F) à 871 °C (1600 °F) pendant une période permettant de recristalliser la région de soudure.

5. Procédé selon la revendication 1, dans lequel l'épaisseur de la région de soudure est réduite dans une plage de 20 à 80 % après façonnage à froid.

6. Procédé selon la revendication 1, dans lequel l'épaisseur au niveau de la région de soudure est sensiblement la même que l'épaisseur de paroi souhaitée de la structure après façonnage à froid.

7. Procédé selon la revendication 1, dans lequel le soudage est effectué par soudage à gaz inerte de tungstène.

8. Procédé selon la revendication 1, dans lequel la région de soudure est formée à partir d'un joint de préparation en V unique.

9. Procédé selon la revendication 1, dans lequel l'étape de formation de la structure comprend en outre la conformation d'une plaque pour constituer la région de soudure.

10. Procédé selon la revendication 1, dans lequel la structure et la région de soudure soudée ont une résistance finale à la traction égale ou supérieure à 400 MPa (58 ksi), une résistance à la déformation égale ou supérieure à 207 MPa (30 ksi) ou les deux.

11. Procédé selon la revendication 1, dans lequel la structure comprend un tuyau ou un réservoir de stockage qui convient à un fonctionnement dans des conditions cryogéniques.
